Europäisches Patentamt

European Patent Office

Office européen des brevets

(19)

(11) **EP 1 344 922 A2**

(12) **EUROPEAN PATENT APPLICATION**

(43) Date of publication:
**17.09.2003 Bulletin 2003/38**

(51) Int Cl.7: **F02D 41/38**, F02D 41/40

(21) Application number: **03005527.1**

(22) Date of filing: **11.03.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK**

(30) Priority: **12.03.2002 JP 2002066544**

(71) Applicant: **TOYOTA JIDOSHA KABUSHIKI KAISHA**
**Aichi-ken 471-8571 (JP)**

(72) Inventors:
• **Ishiyama, Shinobu**
  **Toyota-shi, Aichi-ken, 471-8571 (JP)**
• **Ohki, Hisashi**
  **Toyota-shi, Aichi-ken, 471-8571 (JP)**

• **Hayashi, Kotaro**
  **Toyota-shi, Aichi-ken, 471-8571 (JP)**
• **Magarida, Naofumi**
  **Toyota-shi, Aichi-ken, 471-8571 (JP)**
• **Kobayashi, Masaaki**
  **Toyota-shi, Aichi-ken, 471-8571 (JP)**
• **Shibata, Daisuke**
  **Toyota-shi, Aichi-ken, 471-8571 (JP)**
• **Ohba, Takahiro**
  **Toyota-shi, Aichi-ken, 471-8571 (JP)**
• **Negami, Akihiko**
  **Toyota-shi, Aichi-ken, 471-8571 (JP)**

(74) Representative: **Vollnhals, Aurel**
  **Tiedtke-Bühling-Kinne & Partner (GbR),**
  **TBK-Patent,**
  **Bavariaring 4**
  **80336 München (DE)**

(54) **Fuel injection control device for a diesel engine**

(57)     Provided is a fuel injection control device which secures stability of a combustion state, and simultaneously optimizes exhaust gas characteristics for a diesel engine with a low compression ratio. The fuel injection control device for a diesel engine with a low compression ratio refers to a control map having four predetermined areas determined by a operation state of the engine, and then, selectively employs different types of fuel injection patterns accompanied by as many as twice of pilot injections. The fuel injection control device maximizes the number of conducting the pilot injections so as to prioritize restraining the combustion noise and optimizing exhaust gas characteristics when the operation states of an engine is in an area II where freedom of setting ranges for the timing of conducting the pilot injection and the main injection, and the interval of conducting the individual injections is relatively high (a low load/low rotation speed area).

Fig.4

**Description**

BACKGROUND OF THE INVENTION

1. Field of the Invention

The present invention relates to a fuel injection control device suitable for being applied to a diesel engine with a low compression ratio.

2. Description of the Related Art

In a diesel engine, since the temperature in a combustion chamber is increased by compressing air introduced into the combustion chamber up to a high pressure, and then, fuel is supplied into the chamber by injection for self-igniting the fuel so as to generate engine combustion, it is necessary to sufficiently compress the air in the combustion chamber for securing a stable operation state. Therefore, the compression ratio of the diesel engine is set to a high value compared with a gasoline engine and the like. in addition, it is necessary that a main unit of the diesel engine should have high rigidity for withstanding the engine operation at a high compression ratio.

It has recently been tried to reduce the compression ratio of the diesel engine for increasing the engine output. The rigidity required for the engine main unit is determined by a mechanical load applied to the engine during the operation, and is related to the sum of the magnitude of the compression ratio of the engine and the magnitude of the explosion power (the combustion pressure) caused by the engine combustion. Also, the magnitude of the combustion pressure is determined by the fuel quantity supplied by the injection into the combustion chamber. Therefore, even when engines have equivalent rigidity, an engine with a lower compression ratio can inject a larger amount of fuel supplied for one engine combustion, and thus, can generate a higher engine output.

However, as described above, due to such property of the diesel engine that self-ignition of the fuel supplied into the combustion chamber by injection is induced for generating the engine combustion, the ignitability decreases as the compression ratio decreases.

Basically, it is possible to increase the ignitability by controlling such that the fuel is supplied by injection at timing when the pressure in the combustion chamber is at the maximum.

However, the timing of supplying the fuel by injection with respect to the timing required for optimizing the engine exhaust gas characteristics does not always coincides with the timing required for optimizing the ignitability of the injected fuel.

Also, the diesel engine especially reduces the quantity of the air introduced into the combustion chamber, and recirculates a portion of the exhaust gas to the intake system accordingly in order to reduce the quantity of NOx in the exhaust gas, and to increase the temperature of the exhaust gas for maintaining the active state of a catalyst for purifying the exhaust gas as long as the stability of the engine combustion state is not deteriorated. However, it is undeniable that optimizing combustibility of the injected fuel becomes difficult due to conducting these processes which give priority to improving the exhaust gas characteristics.

That is, when the compression ratio of the diesel engine is decreased to increase the engine output power, it is difficult to secure the stability of the combustion state and to optimize the exhaust gas characteristics simultaneously.

SUMMARY OF THE INVENTION

The present invention is devised in view of the foregoing, and a purpose thereof is to provide a fuel injection control device for a diesel engine which secures the stability of the combustion state, and optimizes the exhaust gas characteristics simultaneously.

To attain the purpose above, the gist of the present invention is to provide A fuel injection control device for a diesel engine, provided with a fuel injection valve for supplying fuel by injection into a combustion chamber of the engine, the fuel injection control device having a function for conducting, as a fuel injection pattern in a single combustion cycle of the engine, a main fuel injection into the combustion chamber and multiple times of sub-injections prior to the main fuel injection, characterized in that the number of conducting the sub-injections prior to the main fuel injection is selected according to an operation state of the engine.

When the minimum capacity of the combustion chamber is set as the clearance volume Vc and the capacity of the gas exhausted from the combustion chamber due to a single stroke (a forward motion or a reverse motion) of a piston is set as the stroke volume Vs as a piston of the engine reciprocates in a cylinder during the operation of the engine, the compression ratio ε of the engine is represented by the following equation (i), for example.

$$\varepsilon = (Vc+Vs) / Vc \qquad (i)$$

When the compression ratio of the diesel engine is decreased, since the quantity of the injected fuel which can be supplied in a single combustion cycle increases, though the output power which the engine can generate increases, the engine combustion state tends to be relatively unstable, and it is difficult to maintain the exhaust gas characteristics in the optimal state. with this constitution, it is possible to minutely control the engine combustion state (especially the transition form of the combustion pressure and the like) according to the operation state of the engine (operation area) through adjusting the number of conducting the sub-injection. That is, since the instability of the engine combustion and the deterioration of the exhaust gas characteristics due to the decrease of the compression ratio of the diesel engine can be eliminated, the stability of the engine combustion state and the optimality of the exhaust gas characteristics are secured in a wide operation area while the output power of the diesel engine is increased by decreasing the compression ratio.

It is also preferable to decrease the number of conducting sub-injections as a load of the engine increases, and a rotation speed of the engine increases.

With this constitution as described above, an optimal fuel injection pattern is selected with respect to restraining the combustion noise, optimizing the exhaust gas characteristics, and stabilizing the engine combustion state (including preventing misfire) in view of such points as upper/lower limits of the total fuel injection quantity injected in a single opening/closing action of the valve, the limit of the operation speed of the fuel injection valve, and the engine temperature. For example, when the operation states of the engine belong to a low load/a low rotation speed area, since the freedom of setting ranges for the timing of conducting the sub-injection and main injection, and for the interval between conducting the individual injection is relatively high, restraining the combustion noise and optimizing the exhaust gas characteristics are prioritized by conducting the sub-injection multiple times prior to the main injection. As the operation states of the engine move toward a high load/a high rotation speed, since the freedom of setting ranges for the timing of conducting the sub-injection and the main injection, and for the interval between conducting the individual injection decreases, the engine temperature tends to increase, and the combustion noise tends to decrease, the stabilizing the combustion state of the engine is prioritized by reducing the number of conducting the sub-injection.

Also, it is preferable to conduct the sub-injection only when the load of the engine exceeds a predetermined value.

A period when the fuel can be injected into the combustion chamber is limited to a predetermined period when the piston of the engine is in a neighborhood of the compression top dead center in the single combustion cycle, and the operation speed of the fuel injection valve has a limit as a mechanical characteristic. With this constitution, only when the load on the engine exceeds a predetermined value, in other words, sufficiently high precision fuel injection can be conducted even if the total quantity of the fuel to be injected is divided into the fuel quantity by the sub-injection and the fuel quantity by the main injection, the sub-injection is conducted. When it is difficult to secure constancy of the quantity of the injected fuel (the state of the engine combustion tends to become unstable) if the total quantity of the fuel to be injected is divided into the fuel quantity by the sub-injection and the fuel quantity by the main injection, the engine combustion is conducted only with the main injection, thereby securing the stability of the engine combustion state. Therefore, the ignitability of the fuel and the stability of the combustion state are secured in the combustion chamber regardless of the operation state of the engine.

Also, it is preferable that the operation state of the engine is determined based on the load and rotation speed of the engine.

Also, it is preferable that the selected number of conducting sub-injections is corresponding to each of a plurality of areas determined by the operation state of the engine as preset on a map.

Also, it is preferable that the map has at least one area, corresponding to a state in which the load of the engine exceeds a predetermined value and the rotation speed of the engine exceeds a predetermined value, thereby no sub-injection is conducted.

Also, it is preferable that the map has one or more areas, wherein the number of conducting sub-injections is decreased as the load of the engine increases, or the rotation speed of the engine increases.

Also, it is preferable that the map has an area corresponding to a condition in which the load of engine is less than a predetermined value, thereby no sub-injection is conducted.

Also, it is preferable that a characteristic of the map varies, according to a compression ratio of the engine.

Also, it is preferable that the engine is provided with a charging unit for increasing a pressure of air taken into the combustion chamber, and a control unit for controlling the pressure of air increased by the charging unit.

With this constitution as described above, it is possible to control the pressure of the air taken into the combustion chamber, thereby variably adjusting the pressure in the combustion chamber of the engine. Consequently, it is possible to extend the operation area where the fuel injection pattern for conducting the sub-injection multiple times can be selected as the fuel injection pattern advantageous to preventing the noise, and improving the exhaust gas characteristics.

BRIEF DESCRIPTION OF THE DRAWINGS

In the accompanying drawings:

FIG. 1 is a drawing of a schematic constitution showing a diesel engine system according to an embodiment of the present invention;
FIGS. 2A to 2C are time charts showing drive pulses corresponding to different types of fuel injection patterns of the engine of the embodiment;
FIG. 3 is a control map which the fuel injection control device of the embodiment uses for selecting the fuel injection pattern; and
FIG. 4 is a flowchart showing processing steps for determining the drive pulses for the fuel injection valve for conducting pilot injection.

DESCRIPTION OF THE PREFERRED
EMBODIMENTS

Hereinbelow, the present invention is described by way of embodiments of a fuel injection control device for a diesel engine system, and a method for conducting a fuel injection supply with the control device.

[Structure and function of engine system]

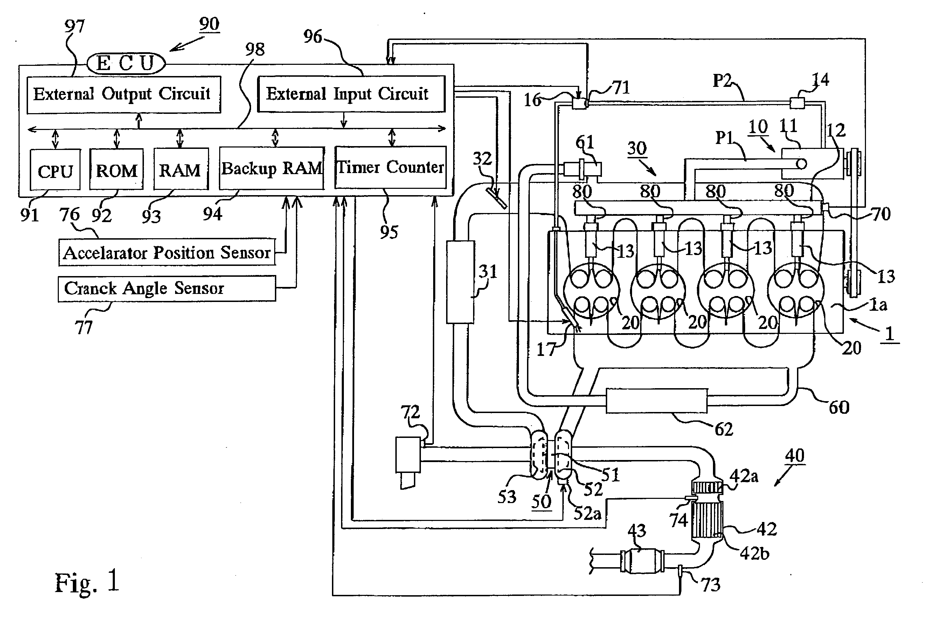

In FIG. 1, reference numeral 1 denotes an internal combustion engine (hereinafter referred to as engine) 1 for a straight (inline) four-cylinder diesel engine system. The engine system is mainly constructed of a fuel supply system 10, combustion chambers 20, an intake system 30, and an exhaust system 40, and has a low compression ratio ($\varepsilon$ . 16) which conducts an engine operation throughout an intake stroke, a compression stroke, an expansion (combustion) stroke, and an exhaust stroke as a single combustion cycle.

First, the fuel supply system 10 includes a supply pump 11, a common rail 12, fuel injection valves 13, a shutoff valve 14, a metering valve 16, a fuel addition valve 17, an engine fuel passageway P1, an added fuel passageway P2, and the like.

The supply pump 11 increases the pressure of the fuel drawn from a fuel tank (not shown) to a high pressure, and supplies the common rail 12 with the fuel through the engine fuel passageway P1. The common rail 12 serves as an accumulator which maintains (accumulates) the high pressure fuel supplied from the supply pump 11 at a predetermined pressure, and distributes the accumulated fuel to the individual fuel injection valves 13. The fuel injection valve 13 is a solenoid valve including an electromagnetic solenoid (not shown) inside, and properly opens the valve to inject the fuel to supply into the combustion chambers 20.

On the other hand, the supply pump 11 supplies the fuel addition valve 17 with a portion of the fuel drawn from the fuel tank through the added fuel passageway P2. The shutoff valve 14 and the metering valve 16 are sequentially provided in the direction from the supply pump 11 to the fuel addition valve 17 on the added fuel passageway P2. The shutoff valve 14 shouts off the added fuel passageway P2 so as to stop the fuel supply in case of emergency. The metering valve 16 controls the pressure PG of the fuel (fuel pressure) supplied for the fuel addition valve 17. The fuel addition valve 17 is a solenoid valve including an electromagnetic solenoid (not shown) inside, and adds fuel, which serves as a reducing agent, in a proper quantity at a proper timing at the upstream of an NOx catalyst casing 42 in the exhaust system 40.

The intake system 30 forms a passageway (intake passageway) for the intake air supplied for the individual combustion chambers 20. On the other hand, the exhaust system 40 forms a passageway (exhaust passageway) for the exhaust gas exhausted from the individual combustion chambers 20.

Additionally, a centrifugal supercharger (turbocharger) 50 is provided for the engine 1. The turbo charger 50 includes two rotation bodies 52 and 53 connected with each other through a shaft 51. The one rotation body (turbine wheel) 52 is exposed to the exhaust gas in the exhaust system 40, and the other rotation body (compressor wheel) 53 is exposed to the intake air in the intake system 30. The turbocharger 50 having this constitution uses the exhaust gas flow (exhaust pressure) received on the turbine wheel 52 to rotate the compressor wheel 53, thereby increasing the intake pressure, namely conducting supercharging. A nozzle passageway (not shown) for guiding the exhaust gas introduced from the upstream of the exhaust system 40 to the turbine wheel 52 is formed in a turbine housing 52A for storing the turbine wheel 52.

A mechanism for variably changing the cross sectional area of this nozzle passageway (referred to as a variable nozzle turbo (VNT) mechanism hereafter) is provided in the turbo charger 50. The VNT mechanism includes a vane body (nozzle vanes) provided inside the nozzle passageway in the turbine housing 52A, and a VNT actuator 52a for operating the nozzle vanes based on a command signal from an electronic control unit (ECU) 90. The ECU 90 adjusts the angle and the area of the nozzle vanes facing the flow of the exhaust gas in the nozzle passageway to variably control the substantial cross sectional area of the nozzle passageway, thereby optimizing the function (supercharging efficiency) of the turbo charger 50. For example, when the rotation speed of the engine 1 is relatively low, the cross sectional area of the nozzle passageway is reduced so as to increase the flow rate and the pressure of the exhaust gas blown on the turbine wheel 52, thereby increasing the rotation speed and the torque of the turbine wheel 52. On the other hand, when the rotation speed of the engine 1 is relatively high, the cross sectional area of the nozzle passageway is increased so as to prevent the flow rate and the pressure of the exhaust gas blown on the turbine wheel 52 from becoming excessively large. The turbo charger 50 constitutes a supercharging unit, and the VNT actuator 52a, the ECU 90, and the like constitute a control unit for controlling the air pressure increased by the supercharging unit in the present invention.

An intercooler 31 provided at the downstream of the compressor wheel 53 in the exhaust system 30 forcibly cools the intake air whose temperature has been raised by the supercharging. The throttle valve 32 provided at the downstream beyond the intercooler 31 is an electronically-controlled type open/close valve whose opening is adjusted continuously variably, and has such a function that the flow passageway sectional area of the intake air is changed under a certain condition so as to adjust the supply quantity (flow rate) of the intake air.

An exhaust gas recirculation passageway (EGR passageway) 60 allowing the intake system 30 and the exhaust system 40 to be in communication with each other is formed in the engine 1. The EGR passageway 60 has a function for properly returning a portion of the exhaust gas to the intake system 30. An EGR valve 61 which is opened/closed continuously variably by electronic control so as to freely adjust the flow rate of the exhaust gas (EGR gas) flowing through the EGR passageway 60, and an EGR cooler 62 for cooling the exhaust gas passing (recirculating) through the EGR passageway 60 are provided on the EGR passageway 60.

In the exhaust system 40, the NOx catalyst casing 42 storing a storage-reduction type NOx catalyst and a particulate filter is provided at the down stream of the communication part between the exhaust system 40 and the EGR passageway 60. Also, an oxidation catalyst casing 43 storing an oxidation catalyst is provided at the downstream of the NOx catalyst casing in the exhaust system 40.

Different types of sensors are installed on individual parts of the engine 1, and output signals on circumstantial conditions of the individual parts, and the operation state of the engine 1.

To be specific, a rail pressure sensor 70 outputs a detection signal according to the pressure of the fuel accumulated in the common rail 12. A fuel pressure sensor 71 outputs a detection signal according to the pressure (fuel pressure) PG of the fuel introduced into the fuel addition valve 17 through the metering valve 16 from the fuel communicating in the added fuel passageway P2. An airflow meter 72 outputs a detection signal according to the flow rate (intake quantity) GA of the intake air at the upstream of the compressor wheel 53 in the intake system 30. An oxygen concentration sensor 73 outputs a detection signal changing continuously according to the oxygen concentration in the exhaust gas at the downstream of the NOx catalyst casing 42 (at the upstream of the oxidation catalyst casing 43) in the exhaust system 40. The detection signal from the oxygen concentration sensor 73 is utilized as a parameter for calculating the air/fuel ratio A/F in the air fuel mixture supplied for the engine combustion of the engine 1. An exhaust gas temperature sensor 74 is mounted at a predetermined position (between a honeycomb structure 42a described later and the particulate filter 42b) in the NOx catalyst casing 42 in the exhaust system 40, and outputs a detection signal according to the exhaust gas temperature (gas temperature at the entrance of the filter) at the position.

An accelerator position sensor 76 is attached to an accelerator pedal (not shown), and outputs a detection signal according to the depressed quantity ACC of the pedal. A crank angle sensor 77 outputs a detection signal (pulse) every time when an output shaft (crank shaft) of the engine 1 rotates by a certain angle.

These individual sensors 70 through 77 are electrically connected with ECU 90.

The ECU 90 includes a central processing unit (CPU) 91, a read-only memory (ROM) 92, a random access memory (RAM) 93, a backup RAM 94, and a timer/counter 95, and further includes a logic operation circuit constituted by connecting these individual parts 91 through 95, an external input circuit 96 including an A/D converter, and an external output circuit 97 with one another through a bidirectional bus 98.

The ECU 90 constituted in this way conducts processing of the detection signals from the different types of the sensors such as an operation of calculating an air/fuel ratio A/F in an air fuel mixture supplied for the engine combustion based on the detection signal from the oxygen concentration sensor 73 as well as conducts different types of control relating to the operation state of the engine 1 such as control relating to the opening/closing action of the fuel injection valves 13, opening adjustment of the EGR valve 61, and opening adjustment of the throttle valve 32 based on the detection signals from these different types of sensors.

[Structure and function of NOx catalyst casing]

The following section details the structure and the function of the MOx catalyst casing 42 provided in the exhaust system 40 among the components of the engine 1 described above.

The straight-flow type honeycomb structure 42a including alumina ($Al_2O_3$) as a main component, and the wall-flow type particulate filter 42b (simply referred to as filter hereafter) including a porous material as a main component are respectively provided serially as exhaust gas purifying catalysts with a predetermined gap inside the NOx catalyst casing 42.

A layer of carrier made of alumina, for example, is formed in multiple passageways forming the honeycomb structure 42a, and an alkaline metal such as potassium (K), sodium (Na), lithium (Li), and cesium (Cs), alkaline earth such as barium (Ba) and calcium (Ca), and rare earth such as lantern (La) and yttrium (Y) serving as the NOx storage agent, and precious metal such as platinum (Pt) serving as the oxidation catalyst (precious metal catalyst) are supported on the surface of the carrier layer. The NOx storage agent and the precious metal catalyst supported mixedly on the carrier (the honeycomb structure on which the carrier layer comprising alumina is formed) 42a jointly constitute the NOx catalyst (storage-reduction type NOx catalyst).

The NOx storage agent has such a characteristic that it stores NOx when the oxygen concentration is high in the exhaust gas, and releases NOx when the oxygen concentration is low (when the reducing component concentration is high) in the exhaust gas. If HC, CO, and the like exist in the exhaust gas when the NOx is released in the exhaust gas, the precious metal catalyst promotes the oxidation reaction of the HC and CO so as to cause oxidation-reduction reaction between the NOx serving as an oxidizing component and HC and co serving as a reducing component. That is, HC and CO are oxidized to $CO_2$ and $H_2O$, and NOx is reduced to $N_2$.

On the other hand, the NOx storage agent no longer stores NOx after it has stored a predetermined limit quantity of NOx even when the oxygen concentration is high in the exhaust gas. The reducing component is intermittently supplied with the fuel addition and post injection described later at the upstream of the NOx catalyst causing 42 in the exhaust passageway in the engine 1, thereby increasing the concentration of the reducing component in the exhaust gas. That is, the reducing component periodically releases and purifies by reducing the NOx stored in the NOx catalyst, and recovers the NOx storing capability of the NOx storage agent before the NOx storage quantity of the NOx catalyst (NOx storage agent) reaches the limit quantity.

On the other hand, the porous material forming the filter 42b is obtained by wash-coating a ceramic material such as cordierite with a coat material such as alumina, titania, zirconia, and zeolite, and has a characteristic to transmit the exhaust gas. Also, the filter 42b is a so-called wall-flow type filter including exhaust gas flow-in passageways which have an open upstream end and a closed downstream end, and exhaust gas flow-out passageways which have a closed upstream end and an open downstream end, which extend in parallel with one another. In addition, a coat layer (carrier layer) made of alumina and the like for supporting the NOx storage agent and the precious metal catalyst is formed in pores formed on the surface and the inside of a partition wall provided between both of the exhaust gas passageways.

The filter 42b having this structure purifies particulates such as soot and noxious components such as NOx contained in the exhaust gas based on the following mechanism.

The NOx storage agent cooperates with the precious metal catalyst to repeat storing, releasing, and purifying NOx according to the oxygen concentration and the reducing Component quantity in the exhaust gas as described above. On the other hand, the NOx storage agent has a characteristic of secondarily generating active oxygen in this process of purifying NOx. When the exhaust gas transmits to pass through the filter 42b, the particulates such as the soot contained in the exhaust gas are caught by the structure (the porous material). Then, since the active oxygen generated by the NOx storage agent has extremely high reactivity (activity) as an oxidizing agent, the particulates deposited on and near the NOx catalyst among the caught particulates react to this active oxygen quickly (without generating luminous flame), and are purified.

Reaction heat generated from the honeycomb structure (NOx catalyst supported by the structure) 42a provided on the upstream side of the NOx catalyst casing 42 efficiently increases the temperature of the filter 42b provided on the downstream side so as to increase action of decomposing the particulates by the filter 42b.

[Fuel addition]

Atomized fuel (reducing agent) is directly added into the exhaust system 40 through the fuel addition valve 17 at a predetermined interval so as to conduct control for increasing the reducing component concentration in the exhaust gas (fuel addition) in the engine 1. The reducing component supplied by the fuel addition periodically releases and purifies by reducing the NOx stored in the NOx catalyst, and recovers the NOx storing capability of the NOx storage agent before the NOx storage quantity of the NOx catalyst (NOx storage agent) provided in the exhaust system 40 reaches the limit quantity.

[Overview of fuel injection control]

The ECU 90 conducts fuel injection control based on the operation states of the engine 1 detected by the detection signals from the different types of the sensors. The fuel injection control relates to conducting the fuel injection in the individual combustion chambers 20 through the individual fuel injection valves 13, and means a series of processes for setting parameters such as quantity of the fuel to be injected, the injection timing, and the injection pattern, and opening/closing the individual fuel injection valves 13 based on these specified parameters in the present embodiment.

The ECU 90 repeats this series of processes at a predetermined interval during the operation of the engine 1. The total quantity of the fuel to be injected (injection period) Q and the injection timing are basically determined by referring to a map (not shown) specified in advance based on the depressed quantity of the accelerator pedal ACC and the rotation speed of the engine NE (the parameter calculated based on the pulse signal from the crank angle sensor).

Relating to setting the fuel injection pattern in a single combustion cycle, the ECU 90 conducts the fuel injection in a neighborhood of the compression top dead center as a main injection in the individual cylinders so as to provide the engine output as well as conducts a fuel injection (pilot injection) prior to the main injection as a sub-injection properly at selected timing in a selected cylinder.

To conduct the fuel injection control in this way, the ECU 90, which conducts supervisory control of the operation of the different types of components of the engine 1, in conjunction with the common rail 12, the fuel injection valves 13, and the like constitutes the fuel injection control device according to the present embodiment.

[Pilot injection]

The inside of the combustion chamber generally reaches to a temperature which induces self-ignition of the fuel at the end of the compression stroke in a diesel engine. Especially, if the fuel supplied for the combustion is supplied at once by injecting it into the combustion chamber when the operation states of the engine are in middle/high load areas, the fuel explosively combusts with accompanying noise. Since the fuel supplied prior to the main injection serves as a heat source (or an ignition source) when the pilot injection is conducted, and the heat source gradually expands in the combustion chamber to reach to the combustion, the combustion state of the fuel is relatively slow in the combustion chamber, and simultaneously, the ignition delay is reduced. Therefore, the noise caused by the engine operation is reduced, and further, the NOx quantity is reduced in the exhaust gas.

The fuel injection control device according to the present embodiment has a function for conducting the pilot injection at most twice and the following main injection in succession in a single combustion cycle in the individual cylinders of the engine 1 under proper operation states. In the following section, in a single combustion cycle, a fuel injection pattern where two pilot injections and one main injection are conducted successively is referred to as a multi-pilot injection, and a fuel injection pattern where one pilot injection and one main injection are conducted successively is referred to as a standard pilot injection. In addition, a fuel injection pattern where only one main injection is conducted without conducting the pilot injection is referred to as a single injection.

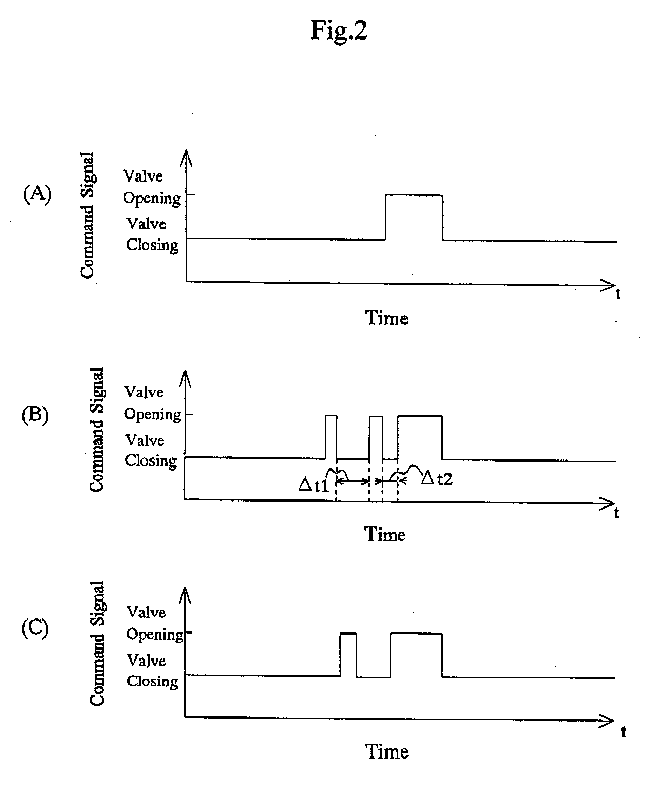

FIGS. 2A to 2C include timing charts showing command signals from the ECU 90 according to the individual patterns for the three types of the fuel injection patterns conducted by the engine 1.

First, the command signal shown in FIG. 2A corresponds to the single injection. As shown in FIG. 2A, when the single injection is employed, the ECU 90 outputs a predetermined drive pulse (command signal) for opening the fuel injection valve 13 for a certain period once in the single combustion cycle.

Then, the command signal shown in FIG. 2B corresponds to the multi-pilot injection. As shown in FIG. 2B, when the multi-pilot injection is employed, the ECU 90 outputs drive pulses (command signals) respectively corresponding to the two pilot injection and the one main injection in the single combustion cycle. That is, the drive pulses are intermittently provided three times in total.

Lastly, the command signal shown in FIG. 2C corresponds to the standard pilot injection. As shown in FIG. 2C, when the fuel injection pattern for conducting the pilot injection once is employed, the ECU 90 outputs drive pulses respectively corresponding to the one pilot injection and the one main injection in the single combustion cycle. That is, the drive pulses are intermittently outputted twice in total.

When the multi-pilot injection is conducted, since the first pilot injection mainly has an action of reliably forming an ignition source in the combustion chambers 20 so as to increase the ignitability of the fuel, it has an effect of restraining the noise caused by the engine combustion. On the other hand, the second pilot injection (the pilot injection at a timing closer to the main injection) mainly has an action of generating a gentle flame spread in the combustion Chamber so as to prevent an ignition delay. Thus, when the second pilot injection is conducted, a misfire hardly occurs even if the start timing of the main injection is delayed. Since delaying the start timing of the main injection tends to reduce the smoke generation in the exhaust gas, conducting the second pilot injection allows delaying the start timing of the main injection, thereby indirectly reducing the smoke generation in the exhaust gas.

When the standard pilot injection is conducted, though it is possible to provide an effect proportional to that provided by conducting the multi-pilot injection, employing the multi-pilot injection provides more significant effect with. respect to restraining the noise caused by the engine combustion, and stabilizing the combustion.

The multi-pilot injection is basically conducted in as wide an area as possible with respect to restraining the noise caused by the engine combustion, and increasing the stability of the combustion in the fuel injection control device according to the present embodiment. However, the standard pilot injection and the single injection are properly employed based on the relationship between the total quantity Q of the fuel to be supplied by injection into the combustion chambers 20 (as a parameter representing a load of the engine 1), and the rotation speed of engine NE.

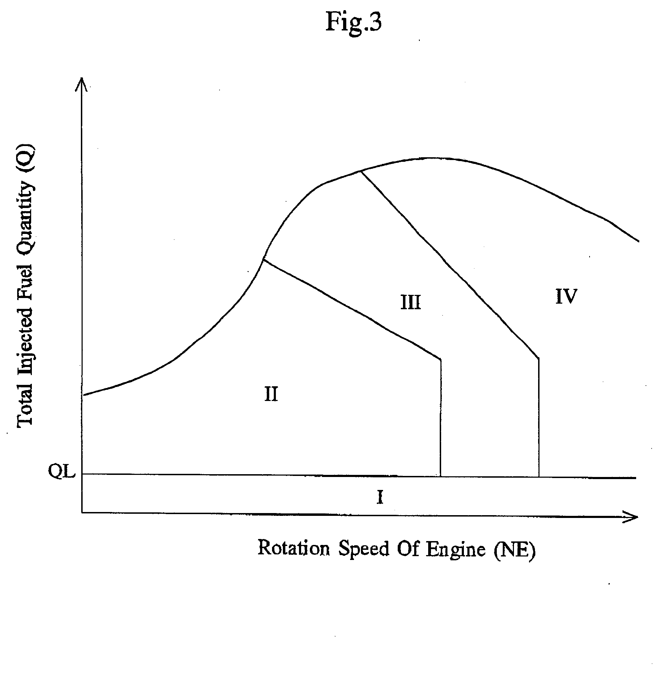

FIG. 3 schematically shows a control map which the fuel injection control device of the present embodiment uses for selecting the fuel injection pattern.

As shown in FIG. 3, four areas determined by the relationship between the total fuel injection quantity Q and the rotation speed of the engine NE, namely the operation states of the engine 1, are specified in advance on the map.

When the operation states of the engine 1 exist in the area I, namely the total fuel injection quantity Q is less than a predetermined value QL, the single injection is employed as the fuel injection pattern (No pilot injection is conducted). Under this condition, it is difficult to divide the total quantity of the fuel supplied by injection through the valve 13 into multiple portions. This is caused by such reasons that a period when the fuel can be injected into the combustion chambers 20 is limited to a predetermined period when the piston (not shown) of the engine 1 is in a neighborhood of the compression top dead center in the single combustion cycle, and the operation speed of the fuel injection valve 13 has a limit as the mechanical characteristic. Therefore, when the total fuel injection quantity Q is less than the lower limit value QL set in advance, the single injection is employed as the fuel injection pattern (the pilot injection is conducted only when the total fuel injection quantity Q exceeds the lower limit value QL) so as to reliably secure the stability of the combustion state (including misfire prevention) of the engine 1.

When the operation state of the engine 1 is in the area II, the multi-pilot injection is employed as the fuel injection pattern. When the operation state of the engine 1 is in the area III, the standard pilot injection is employed as the fuel injection pattern. When the operation state of the engine 1 is in the area IV, the single injection is employed as the fuel injection pattern (No pilot injection is conducted). since the freedom of the setting range for the timing of conducting the pilot injections and the main injection, and the intervals of conducting the individual injections (a period Δt1 and a period Δt2 in FIG. 2B is relatively high in the area II corresponding to the operation states at the low load/low rotation speed, the multi-injection is employed to prioritize restraining the combustion noise and optimizing the exhaust gas characteristics. Then, since the freedom of the setting range for the timing of conducting the pilot injections and the main injection, and the intervals of conducting the individual injections is relatively low in the area III corresponding to the operation states at the middle load/middle rotation speed compared with the area II, the number of the pilot injection to be conducted is reduced to once (the standard pilot injection is employed) to stabilize the engine combustion state and to optimize the exhaust gas characteristics. Further, since the freedom of the setting range for the timing of conducting the pilot injections and the main injection, and the intervals of conducting the individual injections is still lower in the area IV corresponding to the operation state at the high load/high rotation speed compared with the area III, it is difficult to secure sufficient control precision for conducting the pilot injection as well as the temperature of the engine 1 increases, and the combustion noise tends to decrease, the necessity for conducting the pilot injection is low. Therefore, the single injection is employed to prioritize stabilizing the engine combustion state.

[Specific control steps for fuel injection]

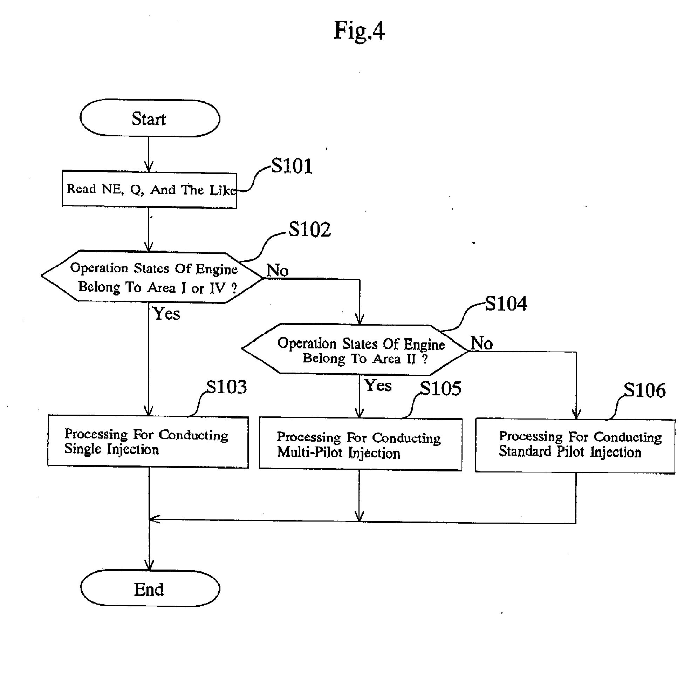

FIG. 4 is a flowchart for showing processing steps (routine) for determining the waveform of the drive pulses of the fuel injection valve 13 when the fuel is injected into the combustion chambers 20. This routine is executed by the ECU 90 at a predetermined interval during the operation of the engine 1.

When the processing moves to this routine, first, the ECU 90 reads in the latest total fuel injection quantity Q and the rotation speed of the engine NE as the parameters relating to the operation states of the engine 1 required for determining the drive pulse in Step S101. In this step, as described above, the total fuel injection quantity Q is independently calculated based on the depressed quantity of the accelerator pedal ACC, the rotation speed of the engine NE and the like.

In Step S102, it is determined whether the operation states of the engine 1 belong to one of the area I and the area IV or not on the map shown in aforementioned FIG. 3. Then, if the result of the determination is affirmative, the ECU 90 moves the procedure to Step S103, and if the result is negative, moves the procedure to Step S104.

In Step S104, it is determined whether the operation states of the engine 1 belong to the area II or not while assuming that the operation states of the engine 1 do not belong to either the area I or the area IV. Then, if the result of the determination is affirmative, the procedure moves to Step S105, and if the result is negative, the procedure moves to Step S106.

If the processing of the ECU 90 moves to Step S103 through Step S102, the operation states of the engine 1 belong to the area I or the area IV. In this case, the ECU 90 calculates the valve opening timing and the valve opening period of the fuel injection valves 13 in order to conduct the single injection (to conduct the main injection without conducting the pilot injection), and outputs the drive pulse (the command signal) shown in aforementioned FIG. 2A according the calculation result.

If the processing of the ECU 90 moves to Step S105 through Steps S102 and S104, the operation states of the engine 1 belong to the area II. In this case, the ECU 90 calculates the valve opening timing and the valve opening period of the fuel injection valves 13 in order to conduct the multi-pilot injection (to conduct two pilot injections and one main injection), and outputs the drive pulse (the command signal) shown in aforementioned FIG. 2B according the calculation result.

If the processing of the ECU 90 moves to Step S106 through steps S102 and S104, the operation states of the engine 1 belong to the area III. In this case, the ECU 90 calculates the valve opening timing and the valve opening period of the fuel injection valves 13 in order to conduct the standard pilot injection (to conduct one pilot injection and one main injection), and outputs the drive pulse (the command signal) shown in aforementioned FIG. 2C according the calculation result.

After having passed through either one of Step S103, S105, or S106, the ECU 90 completes this routine once.

With the fuel injection control device of the present embodiment which applies this control structure, since the different fuel injection patterns are selected for the individual operation areas of the engine 1 determined by the relationship between the load (total fuel injection quantity Q) and the rotation speed NE, the instability of the engine combustion caused by the decreased compression ratio of the diesel engine is eliminated, the effect of increasing engine output resulting from the decreased compression ratio of the engine is sufficiently provided, and restraining the noise caused by the engine combustion and improving the exhaust gas characteristics are simultaneously realized.

In the present embodiment, it is assumed that the diesel engine 1 (with the compression ratio $\varepsilon$ . 16) is a diesel engine with a low compression ratio, and the fuel injection control device of the present invention is applied to it. However, the present invention can be widely applied to diesel engines (with an approximate compression ratio $\varepsilon < 17$) in addition to this engine, thereby providing an effect equivalent or proportional to that of the present embodiment.

In short, when the compression ratio of the diesel engine is decreased, though the quantity of the fuel to be injected which can be supplied in the single combustion cycle increases, and the output power which the engine can generate increases, the engine combustion state tends to be relatively unstable, and it is difficult to maintain the exhaust gas characteristics in the optimal state. Thus, employing the fuel injection control device of the present invention eliminates the instability of the engine combustion and the degradation of the exhaust gas characteristics caused by the decrease of the compression ratio of the diesel engine. That is, the output of the diesel engine is increased by decreasing the compression ratio, and simultaneously, the stability of the engine combustion state and the optimization of the exhaust gas characteristics are secured in a wide operation area.

While the present invention is applied to the diesel engine equipped with the VNT mechanism for variably changing the supercharging pressure in the present embodiment, the present invention can be applied to an engine with a mechanism for variably charging the supercharging pressure which is not this type, or an engine without a supercharger. However, the supercharging pressure can be changed to adjust the pressure of the individual cylinders (in-cylinder pressure) of an engine equipped with a mechanism for variably changing the supercharging pressure, thereby variably controlling the compression ratio of the engine substantially, With the variable control of the compression ratio, it is easy to change the control map characteristic (figure, size, position or allocation of each area on the map) in FIG. 3 for extending the operation area where the pilot injection (especially multiple times of the pilot injections) is suitably conducted. For example, the lower limit value QL of the total quantity of fuel to be injected Q is set to a smaller value in the control map (FIG. 3). Incidentally, the chance of conducting the pilot injection increases simply if the substantial compression ratio is increased by a supercharger under a specific Condition.

That is, applying the present invention to a diesel engine equipped with a supercharger, especially to a diesel engine which can variably change the supercharging pressure, makes the effect of the embodiment described above more remarkable.

Also, in the present embodiment, while the solenoid valve including an electromagnetic solenoid inside (not shown) is employed as the fuel injection valve 13, an effect equivalent to that of the present embodiment is provided when a so-called piezo-drive type fuel injection valve utilizing the characteristic of a piezo element, which extends and contracts in response to the magnitude of the applied voltage or the like, is applied.

As has been described above, according to the present invention, an optimal fuel injection pattern is selected with respect to restraining the combustion noise, optimizing the exhaust gas characteristics, and stabilizing the engine combustion state (including preventing misfire) in view of such points as upper/lower limits of the total fuel injection quantity injected in the single opening/closing action of the valve, the limit of the operation speed of the fuel injection valve, and the engine temperature.

Moreover, any types of catalysts known as exhaust gas purifiers substitute for the storage-reduction type NOx catalyst in the embodiments described above.

Further, the number of conducting the sub-injections is determined by referring to the map shown in Fig.3 in the representative embodiment discussed above. However, the number of conducting the sub-injections may also be calculated as a function of parameters representing the operation states of the engine.

Provided is a fuel injection control device which secures stability of a combustion state, and simultaneously optimizes exhaust gas characteristics for a diesel engine with a low compression ratio. The fuel injection control device for a diesel engine with a low compression ratio refers to a control map having four predetermined areas determined by a operation state of the engine, and then, selectively employs different types of fuel injection patterns accompanied by as many as twice of pilot injections. The fuel injection control device maximizes the number of conducting the pilot injections so as to prioritize restraining the combustion noise and optimizing exhaust gas characteristics when the operation states of an engine is in an area II where freedom of setting ranges for the timing of conducting the pilot injection and the main injection, and the interval of conducting the individual injections is relatively high (a low load/low rotation speed area).

## Claims

1. A fuel injection control device for a diesel engine, provided with a fuel injection valve for supplying fuel by injection into a combustion chamber of the engine,

   the fuel injection control device having a function for conducting, as a fuel injection pattern in a single combustion cycle of the engine, a main fuel injection into the combustion chamber and multiple times of sub-injections prior to the main fuel injection,

**characterized in that** the number of conducting the sub-injections prior to the main fuel injection is selected according to an operation state of the engine.

2. A fuel injection control device according to claim 1, **characterized in that** the number of conducting sub-injections is decreased as a load of the engine increases, or a rotation speed of the engine increases.

3. A fuel injection control device according to claim 1 or 2, **characterized in that** the sub-injection is conducted only when the load of the engine exceeds a predetermined value.

4. A fuel injection control device according to claim 1, **characterized in that** the operation state of the engine is determined based on the load and rotation speed of the engine.

5. A fuel injection control device according to any one of claims 1 to 4, **characterized in that** the selected number of conducting sub-injections is corresponding to each of a plurality of areas determined by the operation state of the engine as preset on a map.

6. A fuel injection control device according to claim 5, **characterized in that** the map has at least one area, corresponding to a state in which the load of the engine exceeds a predetermined value and the rotation speed of the engine exceeds a predetermined value, thereby no sub-injection is conducted.

7. A fuel injection control device according to claim 5 or 6, **characterized in that** the map has one or more areas, wherein the number of conducting sub-injections is decreased as the load of the engine increases, or the rotation speed of the engine increases.

8. A fuel injection control device according to any one of claims 5 to 7, **characterized in that** the map has an area corresponding to a condition in which the load of engine is less than a predetermined value, thereby no sub-injection is conducted.

9. A fuel injection control device according to any one of claims 5 to 8, **characterized in that** a characteristic of the map varies, according to a compression ratio of the engine.

10. A fuel injection control device according to any one of claims 1 to 9, **characterized in that** the engine is provided with a charging unit for increasing a pressure of air taken into the combustion chamber, and a control unit for controlling the pressure of air increased by the charging unit.

Fig. 1

# Fig.2

(A)

(B)

(C)

## Fig.3

Total Injected Fuel Quantity (Q)

QL

I

II

III

IV

Rotation Speed Of Engine (NE)

# Fig.4

```
              ┌──────────────┐
              │    Start     │
              └──────┬───────┘
                     │
                     ▼                    ─S101
              ┌────────────────────────┐
              │ Read NE, Q, And The Like│
              └──────┬─────────────────┘
                     │                    ─S102
                     ▼
              ╱─────────────────────╲   No
             ╱ Operation States Of Engine╲─────────┐
             ╲ Belong To Area I or IV ?  ╱          │
              ╲─────────────────────╱               │
                     │ Yes                          ▼              ─S104
                     │                      ╱──────────────────╲   No
                     │                     ╱ Operation States Of Engine╲──────────┐
                     │                     ╲  Belong To Area II ?      ╱           │
                     │                      ╲──────────────────╱                  │
                     │            ─S103              │ Yes  ─S105                  │   ─S106
                     ▼                               ▼                             ▼
              ┌────────────────────┐   ┌────────────────────┐   ┌────────────────────┐
              │ Processing For Conducting│ │ Processing For Conducting│ │ Processing For Conducting│
              │ Single Injection   │   │ Multi-Pilot Injection│   │ Standard Pilot Injection│
              └──────┬─────────────┘   └──────┬─────────────┘   └──────┬─────────────┘
                     │                        │                        │
                     ◄────────────────────────┴────────────────────────┘
                     │
                     ▼
              ┌──────────────┐
              │     End      │
              └──────────────┘
```